# EUROPEAN PATENT APPLICATION

(11) **EP 4 181 631 A1**
(43) Date of publication of application: **17.05.2023**
(21) Application number: 22206569.0
(22) Date of filing: 10.11.2022
(51) Int. Cl.: H05B 47/19, H02J 50/12, H02J 50/40

(54) **LIGHTING APPARATUS AND CORRESPONDING METHOD OF USE**

(30) Priority: 11.11.2021 IT 202100028721
(71) Applicant: LINEA LIGHT S.R.L., 31028 Vazzola (TV) (IT)
(72) Inventor: Dedovic, Edin, 31059 Zero Branco (IT)
(74) Representative: Petraz, Gilberto Luigi

(57) **Abstract**

The present invention describes a lighting apparatus (10) comprising at least one pair (11) of conductors (12) provided with a plurality of electrical energy transmitters (13) able to cooperate, during use, with at least one user device (15) equipped with an electrical energy receiver (14). The invention also describes a method of use of a lighting apparatus (10).

## Description

### FIELD OF THE INVENTION

The present invention concerns a lighting apparatus and the corresponding method of use.

Said lighting apparatuses can be applied outdoors, for example in a garden or in a swimming pool, or indoors, for example for residential use or in an office.

In particular, but not only, the lighting apparatus can be applied in the sector of lighting engineering, to create temporary or non-temporary lighting systems that, along their length, power one or more light sources, for example, but not only, LED sources (Light Emitting Diodes).

### BACKGROUND OF THE INVENTION

It is known that light sources are traditionally powered by means of electrical connection, or connectors, to a source of electrical energy, such as an electrical network. This entails some critical factors, such as for example the amount of energy that the connector can support, its size and the ability to make it watertight if used in damp environments, for example in the case of outdoor applications or even worse, in swimming pools (immersion in water).

Another problem is installation and maintenance; referring for example to a swimming pool, which would have to be emptied in order to be able to connect or disconnect a bulb, or the bulb itself would have to have a cable several meters long so as to be able to be extracted and replaced outside the swimming pool.

Electrical energy can also be supplied through alternative sources, such as solar panels, accumulators, batteries or suchlike. In addition to the higher cost caused by having to have these alternative sources available, they do not always solve the problem of safety and do not guarantee continuity in the availability of electrical energy. The problem of simple maintenance also remains.

Document US-A1-2010/219693 describes an induction power supply system, which in one embodiment comprises a plurality of primary inductors connected by respective conduction cables made in the form of metal cables or foils, which are disposed in fixed positions on a panel suitable to be incorporated into a wall, or in wallpaper. In another embodiment, the power supply system comprises a mechanism for positioning a primary inductor, which is disposed sliding between two surfaces. In both cases, however, the power supply system needs to be firmly attached to a wall, table or floor, and is not suitable for use for temporary installations as well.

Document WO-A-2016/012894 describes a lighting system comprising a base station connected by means of conductor cables to a plurality of lighting components, in which the base station is provided with a radio frequency amplifier which converts an electric current supplied by an electrical connection network into a radio frequency signal to be supplied to the conductor cables. Each lighting component comprises a power coupler and a PLC (Power Line Communication) coupler, which are provided on two components which, during use, are connected to each other on opposite sides of the conductor wires in correspondence with specific through apertures made with a defined pitch in an insulating tape.

Document WO-A-92/17929 describes a system to distribute energy by means of induction, integrated on a rail to move machinery and objects along it.

There is therefore a need to perfect a lighting apparatus which can overcome at least one of the disadvantages of the state of the art.

In particular, one purpose of the present invention is to provide a lighting apparatus, and to perfect a corresponding method of use, to create flexibility and simplicity of installation and maintenance.

Another purpose is to provide a lighting apparatus which allows to improve safety in the use of the lighting sources.

Another purpose is also to provide a versatile lighting apparatus which can be used both for temporary installations and also for fixed installations, integrated in walls or other components.

Another purpose of the invention is also to provide a lighting apparatus which allows to adapt its conformation in relation to the application of use.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, and to resolve the technical problem disclosed above in a new and original way, also achieving considerable advantages compared to the state of the prior art, a contactless lighting apparatus according to the present invention comprises at least one pair of flexible and insulated conductors, at least one user device and a plurality of contactless electrical energy transmitters distributed along the conductors and comprising magnetic field generating coils and connectors configured to electrically and mechanically connect the coils to the at least one pair of conductors in a desired position, in which the transmitters are configured to cooperate, during use, with at least one electrical energy receiver of least one electrical energy user device.

Doing so achieves at least the advantage that all the live parts of the contactless lighting apparatus can be insulated from the outside, thus limiting the possibility of current dispersions, lightning strikes and similar events.

In accordance with another aspect of the present invention, the conductors can be flexible, thus allowing to simply position the transmitters, and therefore the electrical energy distribution points, where desired.

In accordance with another aspect of the present invention, the transmitters can be distributed along a part or the entire length of the at least one pair of conductors. Advantageously, in this way it is possible to distribute the lighting points, thus being able to serve user devices positioned even far from each other, without having to run additional cables to them. It is therefore possible to increase the safety and ease of use of the user devices, avoiding using a multitude of cables that can be tripped over and making it easier to set up the user devices.

In accordance with another aspect of the present invention, the at least one pair of conductors can be sealed from the outside at least for all of a portion thereof in which it has the transmitters. Advantageously, in this way it is possible to use the contactless lighting apparatus safely, for example in humid places or in the presence of water.

This conformation of the apparatus makes it suitable to be used not only integrated in newly built structures or environments, but also in those situations that require flexibility of installation because it is not possible to create a new electrical system, for example in environments subject to archaeological constraints, cultural heritage sites or suchlike. Furthermore, the apparatus can be advantageously used for temporary installations, both in indoor as well as outdoor environments and, furthermore, it makes it possible to replace one or more user devices, for example to change their type of lighting, color, or in the event of a malfunction, without needing to remove the signal from the entire system.

In accordance with another aspect of the present invention, the apparatus can comprise elements (outer casings or accessories) for housing the at least one pair of conductors. Advantageously, the housing elements can be able to protect the conductors and/or to facilitate their positioning. Furthermore, by means of the housing element, it is possible to obtain safe lighting points, temporary or not, also because the conductors can be positioned in proximity to each other, and they can be constrained to the position in which they are to be positioned.

In accordance with another aspect of the present invention, the housing elements can comprise mechanical clamping elements for clamping the at least one user device. It is an advantage to be able to install or replace the user devices even in distribution points located in difficult positions, for example even on a vertical support, on a ceiling, a pole or suchlike, since the clamping elements allow to secure the user devices in the desired position.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a top schematic view of a lighting apparatus according to the present invention;
- figs. 1a, 1b are section views of the lighting apparatus of fig. 1, according to sections Ia-Ia, Ib-Ib, respectively;
- fig. 1c is a lateral schematic view of the lighting apparatus of fig. 1;
- fig. 1d is a detail of a lateral schematic view of a lighting apparatus according to a variant with respect to fig. 1c;
- figs. 2, 3 are top schematic views of a lighting apparatus according to additional forms of representation;
- figs. 2a, 3a are section views of the lighting apparatus of fig. 2 and of fig. 3, respectively, according to sections IIa-IIa, IIIa-IIIa;
- fig. 4a is a lateral schematic view of a lighting apparatus according to some embodiments;
- fig. 4b is a top schematic view of the lighting apparatus of fig. 4a;
- figs. 4c, 4d are section views of the lighting apparatus of fig. 4b, according to sections IVc- IVc, IVd- IVd;
- figs. 5a, 5b are lateral schematic views of a detail of the lighting apparatus, according to some embodiments;
- figs. 6a, 6b, 6c are top schematic views of a detail of the lighting apparatus, according to additional embodiments;
- figs. 7a, 7b, 7c are lateral schematic views of the detail of the lighting apparatus of figs. 6a, 6b, 6c;
- figs. 8a, 8b are example views of applications of a lighting apparatus according to the present invention;
- fig. 9 shows a possible configuration of the lighting apparatus in which it is possible to see the flexibility on two different planes;
- fig. 10 shows a schematic three-dimensional view of a lighting apparatus according to a variant of the present invention;
- fig. 11 shows a top view of the possible positioning of a transmitter along the conductors;
- figs. 12 and 13 show, in section, two coupling steps between a transmitter and the conductors;
- fig. 14 shows an example installation of the lighting apparatus in which the transmitter and the user device are distanced from each other;
- figs. 15 and 16 show a section view and a lateral view, respectively, of an installation example in which the transmitter and the user device are placed in contact with each other.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

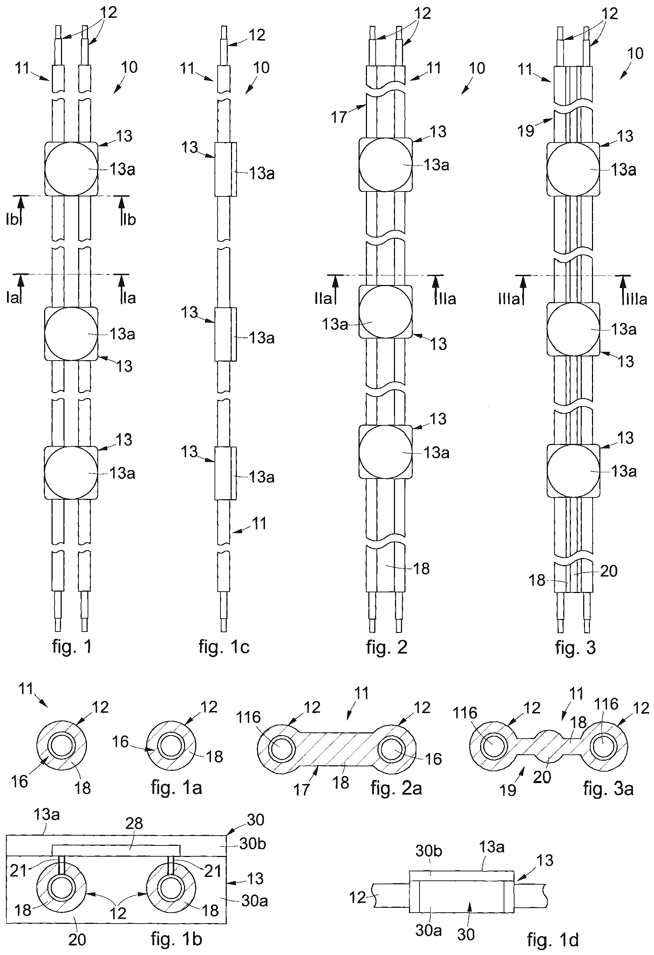

With reference to figs. 1, 2, 3, a contactless lighting apparatus 10 according to the present invention comprises at least one pair 11 of conductors 12 which are, in a known manner, suitable to carry electrical energy.

The at least one pair 11 of conductors 12 can be in the form of a pair of single cables 16 (figs. 1, 1a), rip cords 17, understood as comprising conductor cables 116 inserted inside elements of insulating material 18, for example polymeric material 18, which develop mainly in a longitudinal direction (figs. 2, 2a), reinforced rip cords 19 comprising conductor cables 116 with reinforcing elements 20 such as ribs, metal wires or wires of other material (figs. 3, 3a), or suchlike.

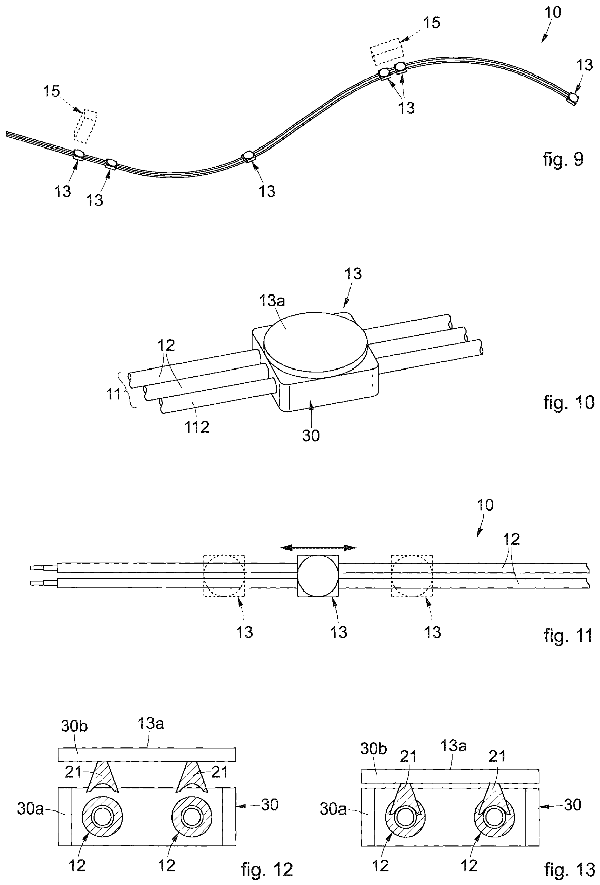

According to some embodiments, three or more conductors 12, 112 can be provided, of which at least one pair 11 is suitable to carry electrical energy and at least one other conductor 112 is suitable to carry a control or command signal. By way of example, fig. 10 shows an embodiment with three conductors 12, 112.

In any case, the conductors 12 are provided with an individual or common coating of insulating material 18, which makes them suitable to be used both outdoors and also in damp environments, even without needing to be installed inside components or walls.

The conductors 12 can be rigid or flexible, preferably flexible. In particular, the conductors 12 and, if present, 112 are flexible both with respect to their lying plane and also with respect to a plane orthogonal thereto, making it possible to adapt the lighting apparatus 10 to a plurality of different installations. Fig. 9, by way of example, shows a lighting apparatus 10 having only one pair 11 of conductors 12, as in the embodiment of fig. 1, but similar or comparable flexibility can also be achieved with the embodiments of figs. 2, 3 or 10.

The apparatus 10 is provided with a plurality of contactless electrical energy transmitters 13.

The transmitters 13 can be comprised in the apparatus 10 and be directly connected to the conductors 12, for example during the production phase, or they can be separate devices and be connected to the conductors 12 during the installation phase of the apparatus 10.

The transmitters 13 can be positioned on and cooperating with the at least one pair 11 of conductors 12, and they can be electrically and mechanically connected to the at least one pair 11 of conductors 12.

The transmitters 13 are able to cooperate, during use, with one or more user devices 15.

Depending on the applications, each transmitter 13 can cooperate on each occasion with a different user device 15, thus allowing to rapidly adapt the apparatus 10, for example by modifying the type depending on requirements.

In particular, the transmitters 13 can be able to cooperate with at least one electrical energy receiver 14 of the user device 15.

The receiver 14 can be incorporated in the user device 15. Preferably, the receiver 14 is housed in a watertight manner in a support body 34 of the user device 15.

According to alternative embodiments, the receiver 14 can be external to the user device 15 and able to cooperate with it. In particular, a user device 15 can cooperate with one or more receivers 14.

The transmitters 13 can be able to transmit power in contactless mode by means of induction technology, magnetic resonance technology or suchlike.

The transmitters 13 can comprise respective magnetic field generating coils 28.

The transmitters 13 can comprise connectors 21 (fig. 1b) to connect the conductors 12 to the electrical components of the transmitter 13, for example to the magnetic field generating coils 28.

According to an alternative embodiment, the transmitter 13 can be constructed around the conductors 12, which are adapted, in correspondence with the transmitter 13, to generate the magnetic field, for example to form an electromagnetic field generating coil.

If there is only one pair 11 of conductors 12, there will be two connectors 21 able to each connect to one of them.

If three or more power supply or control/command conductors 12, 112 are provided, the number of connectors 21 can be higher.

According to some embodiments, each transmitter 13 comprises a support body 30 in which at least one coil 28 and the connectors 21, or at least part thereof, are disposed.

The support body 30 can have a box-like shape, possibly provided with apertures for the passage of the conductors 12.

Preferably, the support body 30 is formed by two parts which can be connected to each other by means of respective coupling members, not shown, or hinged to each other, so as to be able to position the transmitter 13 in any position whatsoever along the conductors 12.

The transmitters 13 are distributed along a part or along the entire length of the at least one pair 11 of conductors 12.

The transmitters 13 can be positioned on the at least one pair 11 of conductors 12 at constant or different distances from each other, for example suitable for one or more specific applications.

According to some embodiments, for example described with reference to fig. 11, the transmitters 13, at least in a phase of construction or installation of the apparatus 10, can be made to slide along the conductors 12 until they reach the desired position and subsequently be electrically and mechanically connected to them by means of the connectors 21, for example by coupling the two parts 30a, 30b of the support body 30 to each other (figs. 12 and 13). In the example case, the connectors 21 are made in the form of pins which extend from the second part 30b; however, they can be made in a different way, or be associated with the first part 30a.

The transmitters 13 can be sized to supply sufficient energy for the type or types of user device 15 with which they can be associated. For example, the transmitter 13 can supply 3-5 W of power, if it has to power an LED lamp, a low consumption detector or suchlike.

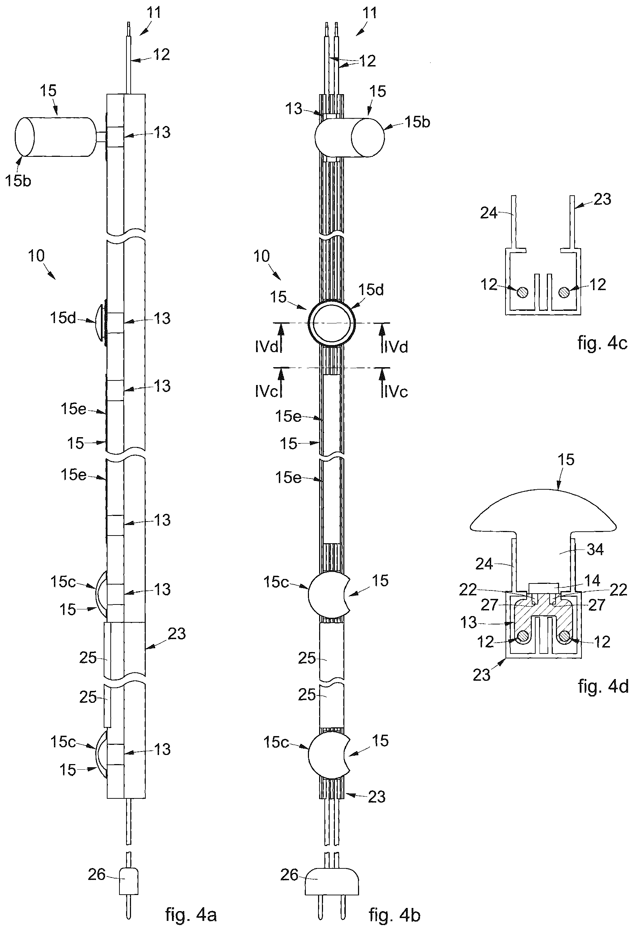

Several transmitters 13 can be associated with a same user device 15, so as to supply greater power to the device itself. For example, user devices 15 of oblong sizes (figs. 4a, 4b) can interact with several transmitters 13.

As another example, at least one pair 11 of conductors 12 can have at least part of the transmitters 13, for example two or three, or more, as a function of the electric power that each of them can transmit, positioned at zero or negligible distance from each other on the conductors 12; in this way, a same user device 15 can manage to interact with part or all of the transmitters 13 of said part of the transmitters 13 (fig. 9).

The assembly of transmitter 13 - at least one pair 11 of conductors 12 can be sealed in a watertight manner. In particular, the at least one pair 11 of conductors 12 can be sealed in a watertight manner at least for the entire length in which it has the transmitters 13.

The at least one pair 11 of conductors 12 can be not sealed in correspondence with at least one terminal part thereof, in particular a terminal part thereof suitable to draw electrical energy from an electrical energy source. For example and in a known manner, the at least one pair 11 of conductors 12 can have a terminal element 26 with exposed terminals for connection to a corresponding outlet of the electrical energy source, or bare terminals for installation to the electrical energy source by a technician.

The user devices 15 can cooperate with or be comprised in the apparatus 10.

The user devices 15 can be electronic devices which require operating powers that the apparatus 10 is capable of supplying. For example, a user device 15 can comprise a light source 31.

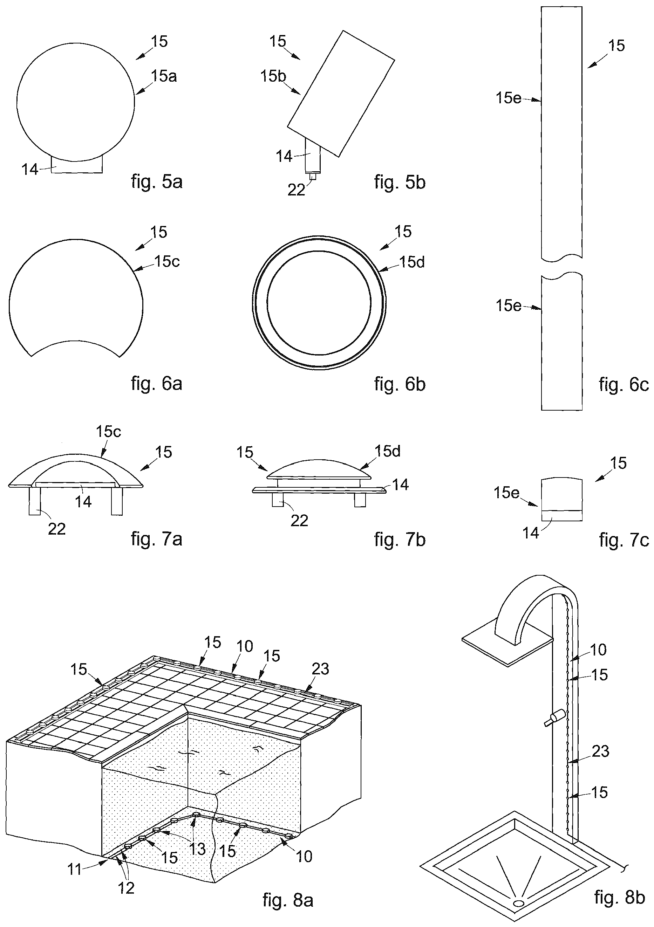

By way of example, a user device 15 of the type in question can be a lamp 15a (fig. 5a), a spotlight 15b (figs. 4a, 4b, 5b), LED sources 15c, 15d, 15e (figs. 4a, 4b, 6a, 6b, 6c, 7a, 7b, 7c).

The user device 15 can be coupled to the transmitter 13 by means of a mechanical connection. The user device 15 can comprise mechanical and/or electrical connection elements 22, for example plug, bayonet or similar connectors, to interface with corresponding connection means 27 on the transmitter 13.

According to some embodiments, which can be combined with the others described here, clamping elements 24 can be provided configured to stably couple the transmitters 13 and the user devices 15 to each other.

According to other embodiments, for example described with reference to figs. 4a-4d, the coupling means can comprise a common housing element 23 for at least one transmitter 13 and a user device 15.

As shown in fig. 4c, the apparatus 10 can comprise one or more housing elements 23 configured to house at least one pair 11 of conductors 12 and at least one coil 28 of a respective transmitter 13.

The housing element 23 can be able to contain and/or fix in position the conductors 12, preferably one conductor 12 in proximity to the other.

The housing element 23 can be a channel, an outer casing, a corrugated element or suchlike, and it can comprise one or more mechanical clamping elements 24 to clamp a user device 15. The clamping element 24 can be a threaded element, an interlocking element, a hook element or suchlike.

The housing element 23 can comprise one or more covering elements 25 to cover the conductors 12, in correspondence with all or part of the portions of the element 23 in which no user devices 15 are positioned.

The apparatus 10 can comprise, in correspondence with at least one terminal part thereof, the terminal element 26 which can be able to interact with an electrical energy source, for example an electrical energy distribution system, a generator or suchlike, to withdraw the electrical energy to be supplied to the plurality of transmitters 13.

For example, the terminal element 26 can be an electrical connector or suchlike.

The operation of the contactless lighting apparatus 10 described heretofore, which corresponds to the method according to the present invention, comprises the steps described below.

The method of use provides to make available a contactless lighting apparatus 10 comprising at least one pair 11 of conductors 12 provided with a plurality of contactless electrical energy transmitters 13.

In accordance with some embodiments, the method of use can comprise an installation step in which one or each transmitter is made to slide along the conductors 12 until it reaches the desired position, and subsequently an electrical and mechanical connection is made between the connectors 21 of the transmitter and the conductors 12.

There can also be provided a step of sealing the transmitter 13 - conductors 12 assembly.

According to some embodiments, the installation step provides to position the conductors 12 according to a desired conformation and to stably fix them.

The conductors 12 can for example be attached in a removable or non-removable manner.

According to other embodiments, the installation step provides to position the conductors 12 according to a desired conformation and temporarily fix them in a removable manner so as to allow their subsequent removal or a subsequent repositioning.

The method can provide that at least one coil 28 of one of the transmitters 13, during use, generates a magnetic field and supplies electrical energy to at least one electrical energy receiver 14 of at least one user device 15, in particular to a coil 29 of the receiver 14.

The method can also provide that a user of the apparatus 10, in an initial installation step, connects the apparatus 10 to a source of electrical energy.

The method can provide that a user of the apparatus 10 positions a user device 15 in correspondence with at least one transmitter 13. The user device 15 can be positioned in proximity to the transmitter 13 or on a contact surface 13a thereof which is able to couple, in a known manner, to a receiver 14 of the user device 15.

The method can provide that, during use, the apparatus 10 supplies electrical energy to at least one user device 15, comprised in or cooperating with the apparatus 10, by means of at least one transmitter 13.

In particular, during use, the method can provide that the user device 15 is powered by induction, magnetic resonance or suchlike, through the transmitters 13.

As shown in fig. 8a, the method can provide to use one or more of the apparatuses 10 inside a swimming pool, positioning the portion of the one or more apparatuses 10 which is sealed in a watertight manner even inside the swimming pool's water.

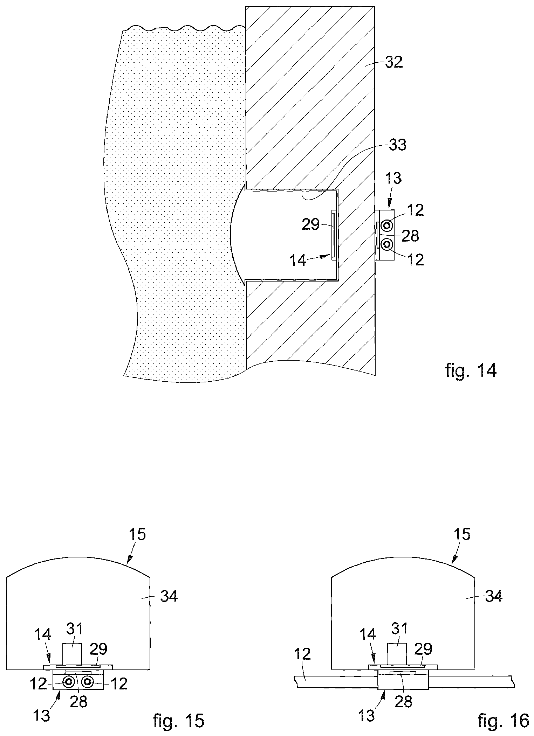

According to some embodiments, it can also be provided that the conductors 12 and the transmitters 13 are positioned on one side of a wall 32, while the user devices 15 are positioned on the opposite side, as for example shown in fig. 14, inserted in special seatings 33 or associated with respective positioning or clamping means, not shown.

This configuration of use proves to be very advantageous in submerged applications such as swimming pools, tanks or tubs, fountains or suchlike, since it allows to position the electrical components connected to an electrical network in a dry environment, while only the user devices 15 are positioned in the water.

According to other variants, the user devices 15 can be positioned directly in contact with the transmitters 13, as for example shown in figs. 15 and 16.

Advantageously, to position, remove or replace a user device 15 it is not necessary to carry out preventive safety measures, such as emptying the water where present, removing humidity or suchlike. In fact, it can be sufficient to free the user device 15 from any mechanical constraint which keeps it associated with the transmitter 13, as well as mechanically constrain the user device 15 to the transmitter 13.

By way of example and as shown in fig. 8b, the method can provide to also use one or more of the apparatuses 10 on a vertical or suspended support, such as a shower unit for example.

It is clear that modifications and/or additions of parts may be made to the apparatus 10 and to the method as described heretofore, without departing from the field and scope of the present invention, as defined by the claims.

It is also clear that, although the present invention has been described with reference to some specific examples, a person of skill in the art shall certainly be able to achieve many other equivalent forms of lighting apparatus 10 and corresponding method of use, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Contactless lighting apparatus (10) comprising at least one pair (11) of flexible and insulated conductors (12) which are able to be connected, during use, to a power supply network, and at least one user device (15) provided with a light source, **characterized in that** said conductors (12) are configured to be positioned, on each occasion, according to a desired conformation and said apparatus (10) comprises a plurality of electrical energy transmitters (13) distributed along said conductors (12) and each comprising at least one magnetic field generating coil (28) and connectors (21) configured to electrically and mechanically connect said coils (28) to said at least one pair (11) of conductors (12) in a desired position, in which said transmitters (13) are configured to cooperate, during use, with at least one electrical energy receiver (14) of said at least one user device (15) provided with a receiving coil (29) in order to allow the supply of electrical energy to said at least one user device (15) by means of induction technology and/or magnetic resonance technology.

2. Apparatus (10) as in claim 1, **characterized in that** said transmitters (13) are distributed along a part or along the entire length of said at least one pair (11) of conductors (12).

3. Apparatus (10) as in any claim hereinbefore, **characterized in that** said at least one pair (11) of conductors (12) is sealed from the outside at least for all of a portion thereof in which it has said transmitters (13).

4. Apparatus (10) as in any claim hereinbefore, **characterized in that** during use the assembly created by each transmitter (13) cooperating with the at least one pair (11) of conductors (12) is sealed in a watertight manner.

5. Apparatus (10) as in any claim hereinbefore, **characterized in that** said receiver (14) is incorporated in said user device (15).

6. Apparatus (10) as in any claim hereinbefore, **characterized in that** it comprises mechanical clamping elements (24) for clamping at least said at least one user device (15) to said transmitter (13).

7. Apparatus (10) as in claim 6, **characterized in that** it comprises housing elements (23) configured to house a portion of said at least one pair (11) of conductors (12) and at least one of said transmitters **and in that** said housing elements (23) comprise said clamping elements (24).

8. Apparatus (10) as in any claim hereinbefore, **characterized in that** it comprises at least one third conductor (112) configured to carry electrical energy or a control and command signal.

9. Apparatus (10) as in any claim hereinbefore, **characterized in that** each of said transmitters (13) comprises a support body (30) in which at least said coil (28) and said connectors (21), or at least part of them, are disposed.

10. Apparatus (10) as in any claim hereinbefore, **characterized in that** there are at least two transmitters (13) positioned at zero or negligible distance from each other on said conductors (12), and a user device (15) cooperating with both said at least two transmitters (13).

11. Method of use of a contactless lighting apparatus (10), the method being **characterized in that** it provides to:
- make available an apparatus (10) comprising at least one pair (11) of flexible and insulated conductors (12) and provided with a plurality of contactless electrical energy transmitters (13) distributed along said conductors (12), wherein said transmitters (13) comprise at least one magnetic field generating coil (28) electrically and mechanically connected to said conductors (12) by means of respective connectors (21);
- position the conductors (12) according to a desired conformation;
- position at least one user device (15) in proximity to, or in contact with, at least one of said transmitters (13);
- connect said conductors (12) to a power supply network in such a way that at least one coil (28) of said at least one transmitter (13) generates a magnetic field suitable to supply electrical energy to at least one receiving coil (29) of at least one electrical energy receiver (14) of said at least one electrical energy user device (15).

12. Method as in claim 11, **characterized in that** it provides that, during use, a user device (15) is powered by two or more of said transmitters (13).

13. Method as in claim 11 or 12, **characterized in that** it comprises an installation step in which one or each transmitter (13) is made to slide along said conductors (12) until it reaches a desired position and subsequently an electrical and mechanical connection is made between said connectors (21) and said conductors (12).

14. Method as in any claim from 11 to 13, **characterized in that** said conductors (12) are stably fixed in the desired conformation in an irremovable manner.

15. Method as in any claim from 11 to 13, **characterized in that** said conductors (12) are stably fixed in the desired conformation temporarily and in a removable manner.
